# EUROPEAN PATENT SPECIFICATION

(11) **EP 2 456 257 B1**
(45) Date of publication and mention of the grant of the patent: **11.10.2017**
(21) Application number: 10799376.8
(22) Date of filing: 09.04.2010
(51) Int. Cl.: H04W 8/24

(54) **METHOD AND SYSTEM FOR UPGRADING WIRELESS DATA CARD**
SYSTEM UND VERFAHREN ZUR AKTUALISIERUNG DRAHTLOSER DATENKARTEN
PROCÉDÉ ET SYSTÈME DE MISE À NIVEAU DE CARTE DE DONNÉES SANS FIL

(30) Priority: 13.07.2009 CN 200910158970
(43) Date of publication of application: 23.05.2012
(73) Proprietor: ZTE Corporation, Shenzhen, Guangdong 518057 (CN)
(72) Inventor: LI, Xipeng, Guangdong 518057 (CN)
(74) Representative: Elzaburu S.L.P.
(86) International application number: PCT/CN2010/071667
(87) International publication number: WO 2011/006378

(56) References cited:
- CN-A- 1 949 718
- CN-A- 101 141 729
- CN-A- 101 478 424
- US-A1- 2004 117 785
- US-A1- 2006 209 857
- US-A1- 2008 141 239
- US-A1- 2008 244 558
- US-B1- 6 708 045

## Description

### Field of the Invention

The present invention relates to the communication field, and in particular to a method and a system for upgrading a wireless data card.

### Background of the Invention

The Firmware Over-The-Air (referred as FOTA) download technique is a technique for wireless remote upgrading firmware on a wireless terminal. The defects of the wireless terminal can be automatically detected and corrected by using this technique, and firmware can be upgraded in a wireless status.

The most common application field of the technique of FOTA is wireless communication field, and particularly, the technique for upgrading firmware via a home gateway by way of using the FOTA technique now only relates to the upgrade of the home gateway itself. But with respect to the home gateway, if it is required to carry out wireless communications such as data and voice access and so on, it can only achieve these with a required wireless data card.

At present, the methods for upgrading firmware in the related art include several kinds as follows:
I. A method of protecting old and new firmware by backup during a upgrade process, wherein the method comprises: saving the old and new firmware in an Flash simultaneously; after the new firmware has been judged as correct by an effectiveness test module of new firmware, uploading a main control program from the new firmware by an upload process module; otherwise, uploading the main control program from the old firmware. Thus the switch between the new firmware and the old firmware is achieved.
II. A method of updating firmware of a mobile terminal by way of firmware over-the-air technique in a mobile communication system, wherein the method comprises: receiving the size information of an update file; selecting a download storage for storing the update file according to the size information; downloading and storing the update file in the selected download storage, and upgrading the firmware using the stored update file. Therefore, the update file can be selectively stored in an internal storage and an external storage by using an FOTA function according to available storage capacity.
III. A method of remotely upgrading a mobile terminal firmware, comprising: preparing to transfer downward firmware packet to be downloaded to an OMA DM sever by an application server; building connection between the OMA DM server and the mobile terminal and downloading the firmware packet to the mobile terminal.
IV. A method for changing a log in FOTA development environment, comprising: generating an aggregated change log of an intermediate binary file included an extractable binary image. The changes between the intermediate binary file and previous iterations of the intermediate binary file can be recorded in the aggregated change log. The aggregated change log can be stored in the intermediate binary file and can be retrieved during follow-up processes. At the same time, the aggregated change log can be analyzed to identify the changed data between the intermediate binary file and previous iterations of the intermediate binary file.

Particularly, the method for upgrading a wireless data card mainly comprises: directly writing an upgrade program to the wireless data card; downloading an upgrade packet via a web page to upgrade the wireless data card; and downloading an upgrade packet by the wireless data card itself to upgrade. However, the disadvantages of above methods are in that the upgrade must be carried out by various supplement techniques, so the wireless data card cannot be upgraded easily and quickly. US 2008141239 and US 2004117785 respectively provide a technical solution applied to mobile devices. US2006209857 A1 discloses a residential gateway with WiFi capabilities. The above mentioned problem is not addressed.

### Summary of the Invention

The present invention is proposed in view of the problem that a wireless data card cannot be upgraded easily and quickly in the related art, for this end, a method and a system for upgrading a wireless data card are provided in the present invention to solve at least one of the above problems, such method and system being captured in independent claims 1 and 6. A method for upgrading a wireless data card is provided according to one aspect of the present invention.

The method for upgrading a wireless data card according to the present invention comprises: downloading, by a home gateway, upgrade data by using a firmware over-the-air download technique, wherein the upgrade data comprises first upgrade data used for upgrading the wireless data card; and upgrading, by the home gateway, the wireless data card by using the first upgrade data.

Furthermore, after upgrading said the wireless data card, said method further comprises: informing, by the wireless data card, the home gateway of a result of successful upgrade of the wireless data card.

Furthermore, after downloading the upgrade data, said method further comprises: S1, checking up the upgrade data; S2, if the check-up succeeds, carrying out the operation of upgrading the wireless data card; S3, if the check-up fails, downloading the upgrade data again, and returning to S1.

Furthermore, the upgrade data further comprises second upgrade data used for upgrading the home gateway.

Furthermore, after upgrading the wireless data card, said method further comprises: said home gateway upgrading itself by using the second upgrade data.

Furthermore, the step of said home gateway upgrading itself comprises: rebooting by the home gateway; upgrading the home gateway by using the second upgrade data; feeding back a result of successful upgrade of the wireless data card and the home gateway by the home gateway.

A system for upgrading a wireless data card is also provided according to another respect of the present invention.

The system for upgrading a wireless data card according to the present invention, comprising: a download unit, configured to download upgrade data by using the firmware over-the-air download technique, wherein the upgrade data comprises first upgrade data used for upgrading the wireless data card; and a first upgrade unit, configured to upgrade the wireless data card by using the first upgrade data.

Furthermore, the above system further comprises: a second upgrade unit, configured to upgrade the home gateway by using second upgrade data in the upgrade data.

Furthermore, the above system further comprises: a checking unit, configured to check the upgrade data downloaded by the download unit.

Furthermore, the above system further comprises: a scheduling unit, configured to schedule the first upgrade unit, and schedule the second upgrade unit according to the operation results of the first upgrade unit.

By way of above technical solution of the present invention, the problem of unable to easily and quickly upgrade a wireless data card currently can be solved, and the upgrade processes of multiple modules can be achieved. Thus it is possible to easily and quickly upgrade the wireless data card via a home gateway in the network under the wireless status, so as to make it possible that the wireless data card upgrades itself, but also be upgraded by using other modules, such as a home gateway, so the upgrade for the wireless data card has higher security.

Other features and advantages of the present invention will be described in the following specification, and partly become obvious from the description, or understood by implementing the present invention. The objects and other advantages of the present invention will be realized and obtained through the structures specially defined in the specification, claims and drawings.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a structural schematic diagram of a home gateway and a wireless data card according to an embodiment of the present invention;
Fig. 2 is another structural schematic diagram of a home gateway and a wireless data card according to another embodiment of the present invention;
Fig. 3 is a schematic diagram of a method for upgrading a wireless data card according to an embodiment of the present invention;
Fig. 4 is a schematic diagram of another method for upgrading a wireless data card according to an embodiment of the present invention;
Fig. 5 is a flow chart of a method for upgrading a wireless data card according to a preferred example of the present invention;
Fig. 6 is a flow chart of a method for upgrading a wireless data card according to another preferred example of the present invention;
Fig. 7 is a structural block diagram of a system for upgrading a wireless data card according to an embodiment of the present invention;
Fig. 8 is a structural block diagram of a system for upgrading a wireless data card according to another embodiment of the present invention.

### Detailed Description of Embodiments

It needs to be noted that the embodiments of the present invention and the features in the embodiments can be combined with each other if there is no conflict. The present invention will be described hereinafter in detail with reference to the drawings and in conjunction with the embodiments.

### Method Embodiments

A method for upgrading a wireless data card is firstly provided according to an embodiment of the present invention. In this method, a home gateway and a wireless data card are involved.

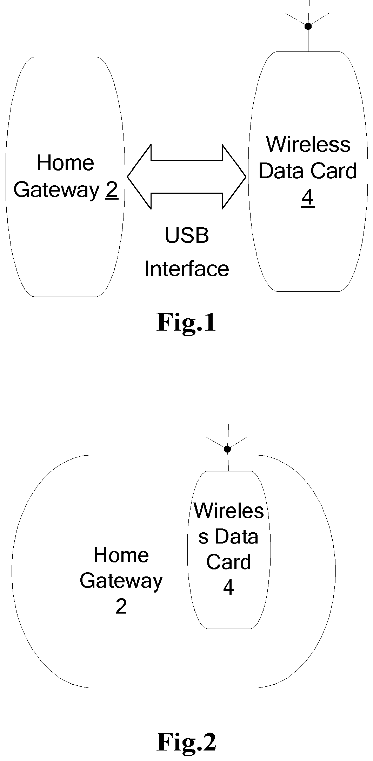

Fig. 1 is a structural schematic diagram of a home gateway. As shown in Fig. 1, the home gateway 2 is not integrated with a wireless data card 4, and the home gateway 2 is connected with the wireless data card 4 via an interface; thus the communication function of wireless data or voice is achieved. The type of interface may, but not limited to, be the type of USB interface.

Fig. 2 is another structural schematic diagram of a home gateway, and as shown in Fig. 2, the home gateway 2 is integrated with the wireless data card 4, and the wireless data card 4 is mainly used to achieve the communication function of wireless data or voice. The type of interface may be, but not limited to, the type of USB interface.

In the following descriptions, the structures of the home gateway 2 and the wireless data card 4 shown in Fig. 1 are both taken as examples, however, the structures of the home gateway 2 and the wireless data card 4 shown in Fig. 2 may also be used.

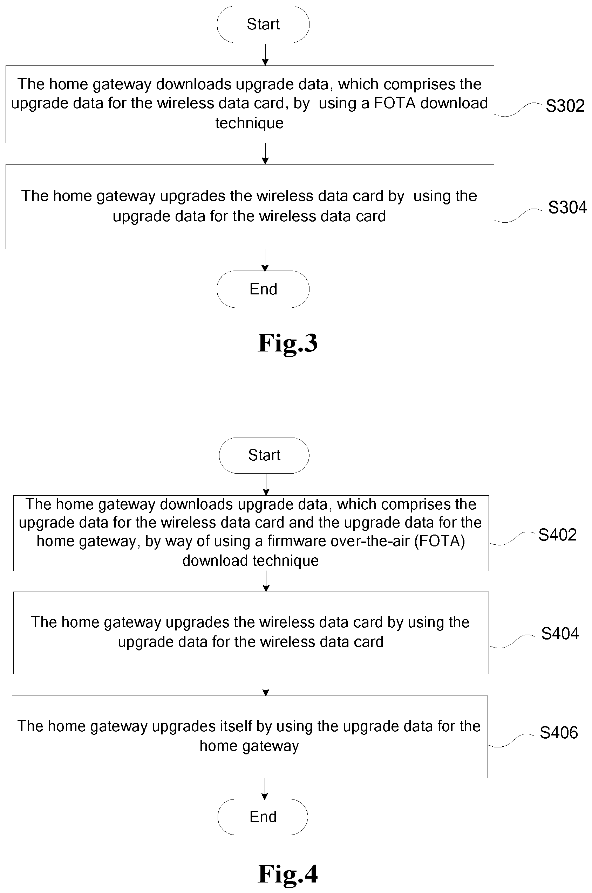

Fig. 3 is a schematic diagram of a method for upgrading a wireless data card, and as shown in Fig. 3, the method includes following steps (Step S302 to Step S304).

Step S302, the home gateway 2 downloads upgrade data by using a FOTA download technique. The upgrade data may be in any form. For example, it may be in upgrade packets, wherein the upgrade data comprises the upgrade data for upgrading the wireless data card. Step S304, the home gateway 2 upgrades the wireless data card 4 by using the upgrade data for upgrading the wireless data card.

By using the method, the wireless data card is upgraded indirectly via the home gateway, so it is easier for the wireless data card to be upgraded by way of wireless remote upgrade.

Fig. 4 is a schematic diagram of another method for upgrading a wireless data card according to the present invention, and as shown in Fig. 4, the method includes following steps (Step S402 to Step S406).

Step S402, the home gateway 2 downloads upgrade data by using the firmware over-the-air download technique, wherein the upgrade data comprises the upgrade data for upgrading the wireless data card and the upgrade data for upgrading the home gateway; Step S404, the home gateway 2 upgrades the wireless data card 4 by using the upgrade data for upgrading the wireless data card; and Step S406, the home gateway 2 upgrades itself by using the upgrade data for upgrading the home gateway.

By using the method, the wireless data card is upgraded indirectly via the home gateway, and the home gateway is self-upgraded, so it is much easier to remotely and wirelessly upgrade the wireless data card.

The method for upgrading the wireless data card will be described hereinafter in detail.

Firstly, an operator sends an upgrade packet downwards to a local home gateway by performing operations on an FOTA server. Of course, it is also possible to send requests to the FOTA server and download the upgrade packets at a preset interval according to its own settings of the home gateway, wherein the upgrade packets comprise two parts: one part is upgrade packets for the home gateway 2, the other part is upgrade packets for the wireless data card 4. Whereas on the server, the upgrade packets are set as a whole packet, and after the upgrade packet has been downloaded by the home gateway, it is required to be separated, and then be separated again into the upgrade packets for the home gateway 2 and the upgrade packets for the wireless data card 4.

After the upgrade packets have been downloaded, it is possible to carry out upgrade operations directly, and also possible to check the upgrade packets firstly and then carry out upgrade operations after the check-up is successful. Therefore, the upgrade mentioned in the embodiments of the present invention, may be only upgrade, only check-up, check-up and upgrade; and in a specific implementation process, preferably it is possible to identify which upgrade operation is used by setting operation identification for related bytes in a Flash because the upgrade is divided into only upgrade, only check-up, and check-up and upgrade.

The checking process is a general checking process in the network transmission, and the downloaded upgrade packets can be checked by using current general methods for checking, such as parity check and so on, i.e. it is judged whether the upgrade packets meet requirements, for example, whether the upgrade packets being integral. If the check-up succeeds, the home gateway is rebooted; otherwise, the upgrade program may exit, i.e. the FOTA upgrade being failed. It is also able to re-download the upgrade packets from the FOTA server at preset time and repeat above steps.

After the home gateway is rebooted, the operating system of the home gateway is to be initialized; after the initialization is finished, the wireless data card 4 is to be upgraded by using the upgrade packets for the wireless data card 4; and if the initialization is not finished, the upgrade program may exit. After the wireless data card 4 is upgraded successfully, the successful upgrade result will be sent back to the home gateway 2. After the home gateway 2 receives the successful upgrade result of the wireless data card 4, the home gateway is rebooted, and then the home gateway 2 begins to upgrade itself by using the upgrade packets for the home gateway 2.

Preferably, the process of the home gateway 2 upgrading itself can be controlled by a Linux operating system; the Linux operating system starts once the home gateway 2 is rebooted, and the operation for upgrading the home gateway 2 gets started to be carried out when it comes into the Uboot stage; after the operation for upgrading finished, the successful or failed upgrade identification is written into specified bytes of the Flash, i.e. after the successful upgrade results of the wireless data card 4 and the home gateway 2 are fed back; and then the home gateway 2 will be rebooted. The upgrade of the home gateway 2 can make it able to achieve the upgrade for the whole home gateway 2.

Preferably, after the home gateway 2 is rebooted again, the operating system of the home gateway 2 is entered into. The bytes are judged whether they are successful or failed, and then a message could be sent to the upgrade processing module; after the upgrade processing module receives the message, it will resolve whether the upgrade is successful or failed and then the home gateway 2 will send the message to the FOTA server under the network-connected condition.

In the implementation process, there are not predefined requirements for the sequence of the upgrade process of the home gateway 2 and the upgrade process of the wireless data card 4. As described above, the wireless data card 4 may be upgraded firstly and then the home gateway 2 is upgraded; and the home gateway 2 may also be upgraded firstly and then the wireless data card 4 is upgraded.

In the specific implementation process, the home gateway 2 may preferably carry out read and write operations on the values of related registers in the Flash during the upgrade process, and judge the status changes during the upgrade process according to these variables, and carry out upgrade process operation according the related status.

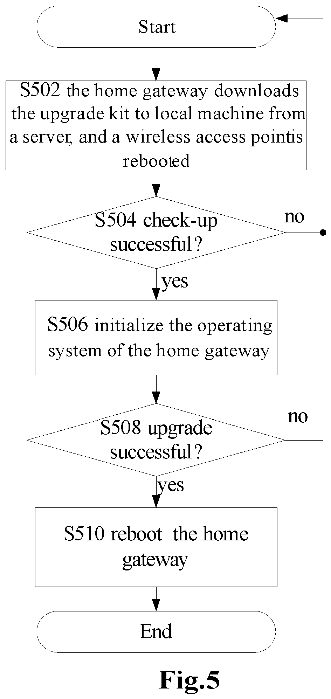

Fig. 5 is a flow chart of a method for upgrading a wireless data card according to a preferred example of the present invention. As shown in Fig. 5, the method for upgrading a wireless data card according to a preferred example of the present invention mainly comprises following steps (Step S502 to Step S510):
Step S502: the home gateway 2 downloads upgrade packets from an FOTA server to the local, wherein the upgrade packets comprise upgrade packets for the wireless data card 4; and after the downloading is finished, the home gateway 2 is rebooted;
Step S504: the upgrade packets are checked up; if the check-up succeeds, go to Step S506; if the check-up fails, the upgrade process is judged as failure, and the upgrade process will exit or the upgrade packets will be re-downloaded;
Step S506: the operating system of the home gateway 2 is initialized;
Step S508: the operating system of the home gateway 2 begins to upgrade the wireless data card 4 by using the upgrade packets for the wireless data card 4; if the upgrade succeeds, go to Step S510, and otherwise, the upgrade process is judged as failure, and the upgrade process will exit or the upgrade packets will be re-downloaded;
Step S510: the home gateway 2 is rebooted.

By way of the method for upgrading a wireless data card provided by above examples, the wireless data card is upgraded by using the home gateway, and the wireless data card can be easily and quickly upgraded by way of wireless remote upgrade.

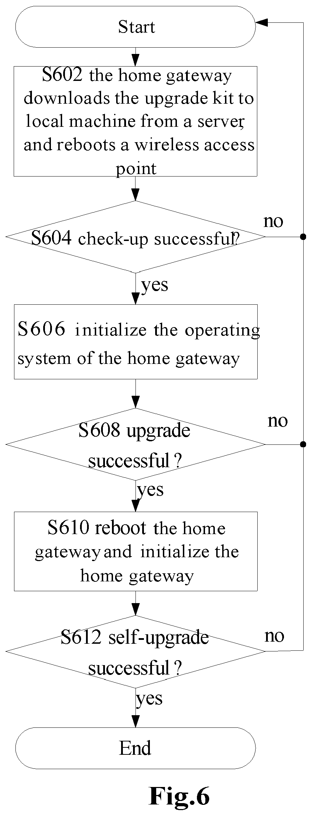

Fig. 6 is a flow chart of a method for upgrading a wireless data card according to another preferred example of the present invention. As shown in Fig. 6, the method for upgrading a wireless data card according to another preferred example of the present invention mainly comprises following steps (Step S602 to Step S612):
Step S602: the home gateway 2 downloads upgrade packets from an FOTA server to the local, wherein the upgrade packets comprises upgrade packets for the home gateway 2 and upgrade packets for the wireless data card 4. After the downloading is finished, the home gateway 2 is rebooted;
Step S604: the upgrade packets are checked up; if the check-up succeeds, go to Step S606; if the check-up fails, the upgrade process is judged as failure, and the upgrade process will exit or the upgrade packets will be re-downloaded;
Step S606: the operating system of the home gateway 2 is initialized;
Step S608: the operating system of the home gateway 2 begins to upgrade the wireless data card 4 by using the upgrade packets for the wireless data card 4; if the upgrade succeeds, go to Step S610, and otherwise, the upgrade process is judged as failure, and the upgrade process will exit or the upgrade packets will be re-downloaded;
Step S610: the home gateway 2 is rebooted, and the home gateway 2 is initialized;
Step S612: the home gateway 2 upgrades itself by using the upgrade packets for the home gateway 2; if the self-upgrade succeeds, the upgrade is finished, so the upgrade process exits; otherwise, the upgrade process is judged as failure or the upgrade packets are re-downloaded.

Preferably, after the upgrade is finished, the home gateway 2 may be rebooted again, and the successful upgrade results of the wireless data card 4 and the home gateway 2 are feedback to the FOTA server. In this case, the home gateway 2 and the wireless data card 4 have been upgraded to new versions.

In the specific implementation process, the home gateway 2 may download the upgrade packets for the home gateway and carries out the above upgrade process only for the home gateway 2 itself; or the home gateway 2 may also carry out the above upgrade process for other modules connected to the home gateway 2 or other modules integrated into the home gateway 2.

By way of the method for upgrading a wireless data card provided by above examples, the wireless data card and the home gateway may be self-upgraded by using the home gateway, and the wireless remote upgrade of the wireless data card can be easily and quickly performed, and not only the home gateway may be self-upgraded, but also other modules such as home gateways etc may be used, which results into higher security for upgrading the wireless data card.

### System embodiments

A system for upgrading a wireless data card is also provided according to an embodiment of the present invention.

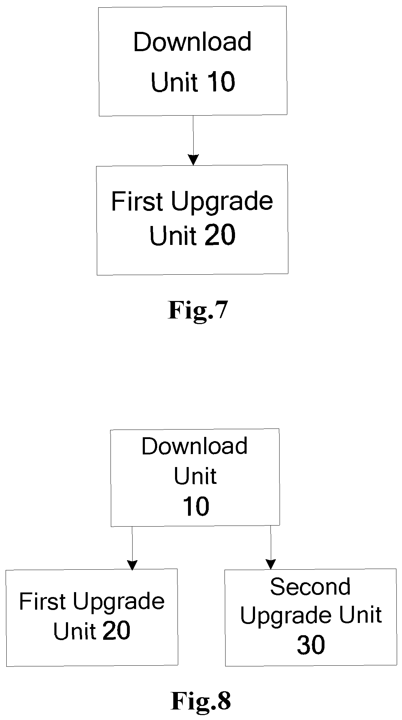

Fig. 7 is a structural block diagram of a system for upgrading a wireless data card according to an embodiment of the present invention. As shown in Fig. 7, the system for upgrading a wireless data card according to an embodiment of the present invention comprises: a download unit 10 and a first upgrade unit 20. Where the download unit 10 is used to download upgrade data by using the firmware over-the-air download technique, wherein the upgrade data comprises the upgrade data for upgrading the wireless data card. The download unit preferably has a resolution function, so as to resolve the upgrade data for the wireless data card from the downloaded upgrade data. The first upgrade unit 20, being connected with the download unit 10, is used to upgrade the wireless data card 4 by using the upgrade data for the wireless data card.

By way of the system for upgrading the wireless data card provided by above embodiments, by using the download unit and the first upgrade unit, it is possible to achieve the effect that the home gateway is used and then the wireless data card is upgraded, so the wireless data card may be easily and quickly upgraded by way of wireless remote upgrade.

Fig. 8 is a structural block diagram of a system for upgrading a wireless data card according to another embodiment of the present invention. As shown in Fig. 8, the system for upgrading a wireless data card according to an embodiment of the present invention comprises: a download unit 10 and a first upgrade unit 20 and a second upgrade unit 30.

Where the download unit 10 is used to download upgrade data by using the firmware over-the-air download technique, wherein the upgrade data comprises the upgrade data for upgrading the wireless data card and the upgrade data for upgrading the home gateway. The download unit preferably has a resolution function, so as to resolve the upgrade data for upgrading the wireless data card and the upgrade data for upgrading the home gateway from the downloaded upgrade data. The first upgrade unit 20, being connected with the download unit 10, is used to upgrade the wireless data card 4 by using the upgrade data for upgrading the wireless data card. The second upgrade unit 30, being connected with the download unit 10, is used to upgrade the home gateway by using the upgrade data for upgrading the home gateway.

By way of the system for upgrading the wireless data card provided by above embodiments, by using the download unit, the first upgrade unit and the second upgrade unit, it is possible to achieve the effect that the home gateway is used to upgrade the wireless data card and the home gateway itself, so the wireless data card may be easily and quickly upgraded by way of wireless remote upgrade.

In conclusion, by way of the upgrade solution for a wireless data card provided by above embodiments of the present invention, the problem of inconvenience for upgrading a wireless data card is resolved, and it is possible that the wireless data card is indirectly upgraded via the home gateway, and the home gateway may also be self-upgraded, and the wireless data card may also be upgraded by using other modules such as home gateways and so on, which results into higher security for upgrading the wireless data card.

Apparently, those skilled in the art shall understand that the above-mentioned modules and steps of the present invention can be realized by using general purpose calculating device, can be integrated in one calculating device or distributed on a network which consists of a plurality of calculating devices, and alternatively the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. Thus, the present invention is not limited to the combination of any specific hardware and software. invention is not limited to the combination of any specific hardware and software.

Above description is only to illustrate the preferred embodiments of the present invention but not to limit the present invention. Various alterations and changes to the present invention are apparent to those skilled in the art. The protective scope defined in the present invention shall comprise any modification, equivalent substitution, improvement etc, within the principle of the present invention.

## Claims

1. A method for upgrading a wireless data card in a home gateway, comprising:
downloading, by the home gateway, upgrade data by using a firmware over-the-air download technique, wherein said upgrade data comprises first upgrade data used for upgrading the wireless data card (S302); and
upgrading said wireless data card by using said first upgrade data, wherein the wireless data card is upgraded by the home gateway (S304);
wherein said upgrade data further comprises second upgrade data used for upgrading said home gateway.

2. The method according to Claim 1, wherein after upgrading said wireless data card, said method further comprises:
informing, by said wireless data card, said home gateway of a result of successful upgrade of said wireless data card.

3. The method according to Claim 2, wherein after downloading said upgrade data, said method further comprises:
S1, checking up said upgrade data;
S2, if the check-up succeeds, carrying out the operation of upgrading said wireless data card;
S3, if the check-up fails, downloading said upgrade data again and returning to S 1.

4. The method according to Claim 1, wherein after upgrading said wireless data card, said method further comprises:
said home gateway upgrading itself by using said second upgrade data.

5. The method according to Claim 4, wherein the step of said home gateway upgrading itself comprises:
rebooting said home gateway;
upgrading said home gateway by using said second upgrade data;
feeding back a result of successful upgrade of said wireless data card and said home gateway by said home gateway.

6. A home gateway comprising a system for upgrading a wireless data card in the home gateway, the system comprising:
a download unit (10) configured to download upgrade data by using a firmware over-the-air download technique, wherein said upgrade data comprises first upgrade data used for upgrading the wireless data card (4); and
a first upgrade unit (20) configured to upgrade said wireless data card (4) by using said fist upgrade data;
said system further comprises:
a second upgrade unit (30) configured to upgrade the home gateway by using second upgrade data in said upgrade data.

7. The home gateway according to Claim 6, wherein said system further comprises:
a checking unit configured to check said upgrade data downloaded by said download unit (10).

8. The home gateway according to Claim 6 or Claim 7, further comprising:
a scheduling unit configured to schedule said first upgrade unit (20), and schedule said second upgrade unit (30) according to the operation results of said first upgrade unit (20).

## Patentansprüche

1. Verfahren zur Aktualisierung einer drahtlosen Datenkarte in einer Heimnetzübergangseinheit, umfassend:
Herunterladen von Aktualisierungsdaten, unter Verwendung einer Firmware-Over-the-Air-Herunterladetechnik, durch die Heimnetzübergangseinheit, wobei die Aktualisierungsdaten zur Aktualisierung der drahtlosen Datenkarte verwendete erste Aktualisierungsdaten umfassen (S302); und
Aktualisieren der drahtlosen Datenkarte unter Verwendung der ersten Aktualisierungsdaten, wobei die drahtlose Datenkarte durch die Heimnetzübergangseinheit aktualisiert wird (S304);
wobei die Aktualisierungsdaten weiter zweite Aktualisierungsdaten umfassen, die zur Aktualisierung der Heimnetzübergangseinheit verwendet werden.

2. Verfahren nach Anspruch 1, wobei das Verfahren, nach dem Aktualisieren der drahtlosen Datenkarte, weiter umfasst:
Informieren der Heimnetzübergangseinheit, durch die drahtlose Datenkarte, über ein Resultat des erfolgreichen Aktualisierens der drahtlosen Datenkarte.

3. Verfahren nach Anspruch 2, wobei das Verfahren, nach dem Herunterladen der Aktualisierungsdaten, weiter umfasst:
S1, Überprüfen der Aktualisierungsdaten;
S2, wenn die Überprüfung erfolgreich ist, Ausführen des Vorgangs des Aktualisierens der drahtlosen Datenkarte;
S3, wenn die Überprüfung scheitert, erneut Herunterladen der Aktualisierungsdaten und Zurückkehren zu S1.

4. Verfahren nach Anspruch 1, wobei das Verfahren, nach dem Aktualisieren der drahtlosen Datenkarte, weiter umfasst:
sich selbst Aktualisieren der Heimnetzübergangseinheit unter Verwendung der zweiten Aktualisierungsdaten.

5. Verfahren nach Anspruch 4, wobei der Schritt des sich selbst Aktualisierens der Heimnetzübergangseinheit umfasst:
Neustarten der Heimnetzübergangseinheit;
Aktualisieren der Heimnetzübergangseinheit unter Verwendung der zweiten Aktualisierungsdaten;
Rückkoppeln eines Resultats des erfolgreichen Aktualisierens der drahtlosen Datenkarte und der Heimnetzübergangseinheit durch die Heimnetzübergangseinheit.

6. Heimnetzübergangseinheit, umfassend ein System zur Aktualisierung einer drahtlosen Datenkarte in der Heimnetzübergangseinheit, wobei das System umfasst:
eine Herunterladeeinheit (10), die zum Herunterladen von Aktualisierungsdaten unter Verwendung einer Firmware-Over-the-Air-Herunterladetechnik eingerichtet ist, wobei die Aktualisierungsdaten erste Aktualisierungsdaten umfassen, die zur Aktualisierung der drahtlosen Datenkarte (4) verwendet werden; und
eine erste Aktualisierungseinheit (20), die zur Aktualisierung der drahtlosen Datenkarte (4) unter Verwendung der ersten Aktualisierungsdaten eingerichtet ist;
wobei das System weiter umfasst:
eine zweite Aktualisierungseinheit (30), die zur Aktualisierung der Heimnetzübergangseinheit unter Verwendung zweiter Aktualisierungsdaten in den Aktualisierungsdaten eingerichtet ist.

7. Heimnetzübergangseinheit nach Anspruch 6, wobei das System weiter umfasst:
eine Prüfeinheit, die zur Überprüfung der von der Herunterladeeinheit (10) heruntergeladenen Aktualisierungsdaten eingerichtet ist.

8. Heimnetzübergangseinheit nach Anspruch 6 oder Anspruch 7, weiter umfassend:
eine Planungseinheit, die zur Planung der ersten Aktualisierungseinheit (20) und zur Planung der zweiten Aktualisierungseinheit (30) gemäß den Vorgangsresultaten der ersten Aktualisierungseinheit (20) eingerichtet ist.

## Revendications

1. Procédé de mise à niveau d'une carte de données sans fil dans une passerelle locale, comprenant :
le téléchargement par la passerelle locale de données de mise à niveau en utilisant une technique de téléchargement par liaison radio de progiciel, dans lequel lesdites données de mise à nouveau comprennent des premières données de mise à niveau utilisées pour mettre à niveau la carte de données sans fil (S302) ; et
la mise à niveau de ladite carte de données sans fil en utilisant lesdites premières données de mise à niveau, dans lequel la carte de données sans fil est mise à niveau par la passerelle locale (S304) ;
dans lequel lesdites données de mise à niveau comprennent en outre des secondes données de mise à niveau utilisées pour mettre à niveau ladite passerelle locale.

2. Procédé selon la revendication 1, dans lequel, après mise à niveau de ladite carte de données sans fil, ledit procédé comprend en outre :
l'information par ladite carte de données sans fil de ladite passerelle locale d'un résultat de mise à niveau satisfaisante de ladite carte de données sans fil.

3. Procédé selon la revendication 2, dans lequel, après téléchargement desdites données de mise à niveau, ledit procédé comprend en outre :
S1, le contrôle desdites données de mise à niveau ;
S2, si le contrôle est satisfaisant, la réalisation de l'opération de mise à niveau de ladite carte de données sans fil ;
S3, si le contrôle fait défaut, le téléchargement desdites données de mise à niveau et le retour à S1.

4. Procédé selon la revendication 1, dans lequel, après mise à niveau de ladite carte de données sans fil, ledit procédé comprend en outre :
la mise à niveau autonome de ladite passerelle locale en utilisant lesdites secondes données de mise à niveau.

5. Procédé selon la revendication 4, dans lequel l'étape de la mise à niveau autonome de ladite passerelle locale comprend :
le relancement de ladite passerelle locale ;
la mise à niveau de ladite passerelle locale en utilisant lesdites secondes données de mise à niveau ;
le renvoi d'un résultat de mise à niveau satisfaisante de ladite carte de données sans fil et de ladite passerelle locale par ladite passerelle locale.

6. Passerelle locale comprenant un système de mise à niveau d'une carte de données sans fil dans la passerelle locale, le système comprenant :
une unité de téléchargement (10) configurée pour télécharger des données de mise à niveau en utilisant une technique de téléchargement par liaison radio de progiciel, dans laquelle lesdites données de mise à niveau comprennent des premières données de mise à niveau utilisées pour mettre à niveau la carte de données sans fil (4) ; et
une première unité de mise à niveau (20) configurée pour mettre à niveau ladite carte de données sans fil (4) en utilisant lesdites premières données de mise à niveau ;
ledit système comprend en outre :
une seconde unité de mise à niveau (30) configurée pour mettre à niveau la passerelle locale en utilisant des secondes données de mise à niveau dans lesdites données de mise à niveau.

7. Passerelle locale selon la revendication 6, dans laquelle ledit système comprend en outre :
une unité de contrôle configurée pour contrôler lesdites données de mise à niveau téléchargées par ladite unité de téléchargement (10).

8. Passerelle locale selon la revendication 6 ou la revendication 7, comprenant en outre :
une unité de programmation configurée pour programmer ladite première unité de mise à niveau (20) et programmer ladite seconde unité de mise à niveau (30) en fonction des résultats de fonctionnement de ladite première unité de mise à niveau (20).
